# EUROPÄISCHE PATENTSCHRIFT

(11) **EP 0 510 524 B1**
(45) Veröffentlichungstag und Bekanntmachung des Hinweises auf die Patenterteilung: **27.09.1995**
(21) Anmeldenummer: 92106598.3
(22) Anmeldetag: 16.04.1992
(51) Int. Cl.: A61C 13/16

(54) **Küvette zum Doublieren zahntechnischer Modelle**
Cuvette for the duplication of dental models
Cuvette pour la duplication des modèles dentaires

(30) Priorität: 24.04.1991 DE 4113363
(43) Veröffentlichungstag der Anmeldung: 28.10.1992
(73) Patentinhaber: Langner, Jan, D-73529 Schwäbisch Gmünd-Strassdorf (DE)
(72) Erfinder: Langner, Jan, D-73529 Schwäbisch Gmünd-Strassdorf (DE)

(56) Entgegenhaltungen:
- DE-U- 8 912 708

## Beschreibung

Die Erfindung bezieht sich auf eine Dublierküvette nach dem Oberbegriff des Patentanspruchs 1.

Bekannt sind derartige Geräte bzw. Vorrichtungen beispielsweise aus der DE-OS 39 06 062 sowie den beiden ebenfalls deutschen Druckschriften DE-GM 83 13 606 und DE-GM 89 12 708, sodaß bezügdes technologischen Hintergrunds und der besonderen Problematik auf diesem Sachgebiet zur Vermeidung von Wiederholungen auf den Inhalt dieser Vorveröffentlichung verwiesen wird.

Insbesondere das vorstehend als letztes genannte DE-GM 89 12 708 (KIEFER), von dem gemäß Oberbegriff von Anspruch 1 ausgegangen wird, spricht dabei vornehmlich die speziellen Besonderheiten der sog. Abbindeexpansion des Einbettmassematerials an und schlägt eine vorbeugende Maßnahme am jeweiligen Modell zu deren nachträglichem Ausgleich vor.

Die vorliegene Erfindung knüpft hieran an, mit der gleichzeitigen Aufgabenstellung einer erheblichen anwendungstechnischen Vereinfachung und handhabungsgemäßen Verbesserung des bekannten Systems.

Die Lösung dieser Aufgabe ist dem kennzeichnenden Teil des Patentanspruchs 1 zu entnehmen; die Unteransprüche beinhalten vorteilhafte Alternativen bzw. Weiterbildungen des neuen Lösungsweges, der anhand von einem Ausführungsbeispiel im folgenden noch näher erläutert ist. Es zeigen:
- Fig. 1: die neue Dublierküvette im Längsschnitt,
- Fig. 2: eine ungeschnittene Seitenansicht zu Fig. 1 und
- Fig. 3: eine "Explosionsdarstellung" der Einzelteile aus Fig. 1 zur Erläuterung.

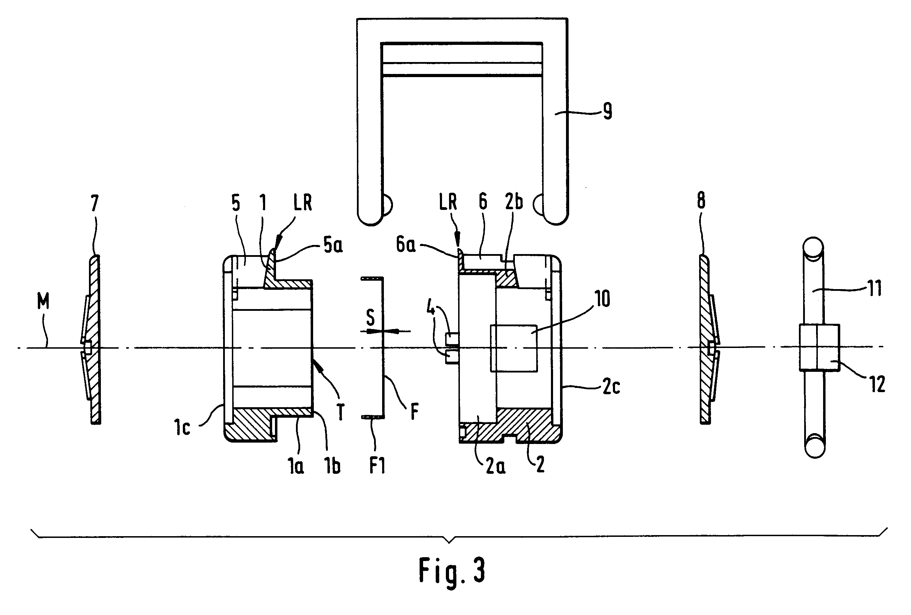

Aus Fig. 3 ist zunächst einmal der generelle Aufbau und die Funktionslage der einzelnen Küvettenbauteile zueinander zu ersehen, wobei bezüglich der Benennung der verschiedenen Positionen auf das zugehörige Bezugsziffernverzeichnis verwiesen wird.

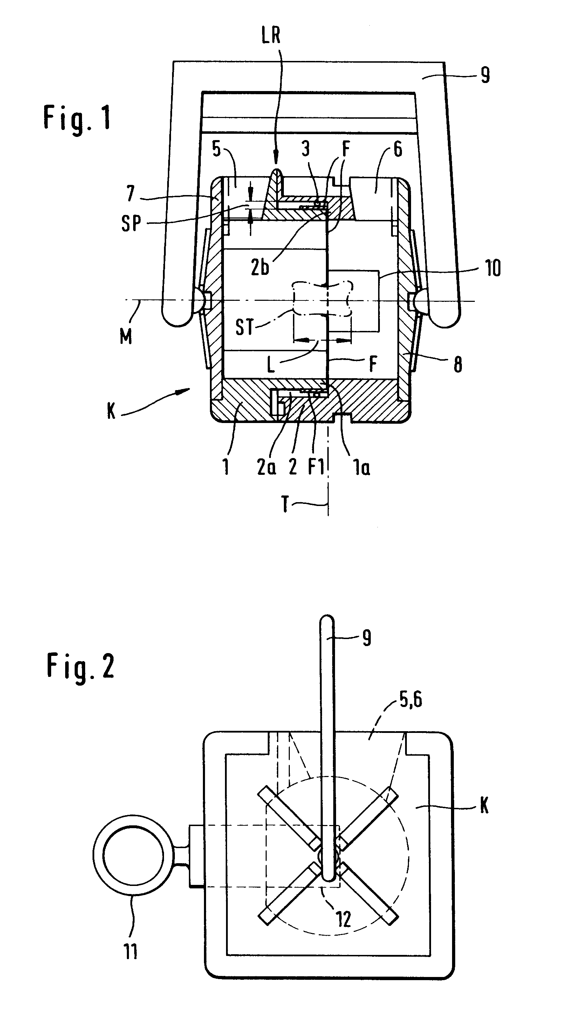

Das wesentliche bei dieser neuen Küvette ist nun, daß gemäß der Fig. 1 und 2 sich bei geschlossener bzw. zusammengebauter Küvette K im Bereich der Trennebene T der beiden Formhälften 1 und 2 eine in ihrer Stärke S der Größe der Abbindeexpansion der jeweiligen Einbettmasse entsprechende Folieneinlage F befindet und das zu doublierende Modell (z.B. ein Zahnstumpf "ST") etwa zur Hälfte seiner Längserstreckung L sowie vorzugsweise im Bereich der Küvettenmittelachse M liegend durch diese Folieneinlage F hindurchgesteckt und in Position gehalten ist, da sich diese Folienmembran elastisch an die äußere Wandung des zu doublierenden Stumpfes ST anschmiegt. Die Küvette ist dabei derart bemessen, daß sie sich nach dem Herausnehmen der das Modell haltenden Membran, die nicht am Silikon anhaftet, um die Dicke "S" der Membran weiter schließt, wodurch die Abbindeexpansion der danach gemäß Patentanspruch 8 eingefüllten, feuerfesten Masse kompensiert wird.

Ein weiterer wesentlicher Vorteil bei der vorliegenden Erfindung ist dabei noch darin zu sehen, daß bei der Oberführung der Gipsmodelle ST in feuerfestes Material, das man bekanntlich für die Anfertigung von Keramik-Inlays oder Veneers benötigt, nicht nur die jeweilige Krone bzw. der jeweilige Zahnstumpf selbst exakt dubliert wird, sondern auch dessen Befestigungen im Modell, also die Bohrungen für die sog. Modellpins.

In weiterer baulich funktioneller Ausgestaltung ist bei der vorliegenden Küvettenneuentwicklung noch vorgesehen, daß eine der Formhälften 1 im Bereich der Trennebene T einen flanschartigen Hals 1a, die andere eine hiermit korrespondierende Ausnehmung 2a mit einem die Einstecktiefe des Halses 1a begrenzenden Anschlagbund 2b aufweist und die Folieneinlage F zwischen letzterem 2b und der Stirnseite 1b des Halses 1a eingeklemmt ist, bzw. alternativ hierzu, daß die Folieneinlage F mit ihren Seiten bzw. Rändern F 1 über die Außenseite des Halses 1a gestülpt bzw. straff über letzteren 1a gespannt und mit einem Klemmring 3 gehalten ist. Hierbei ist es funktionell von Vorteil, wenn Hals 1a und Ausnehmung 2a einen kreisrunden Querschnitt haben, in radialer Richtung mit Spiel SP zueinander liegen und über Zentrierelemente 4 in Position zueinander gehalten sind.

Weiterhin zeichnet sich die neue Küvette noch dadurch aus, daß jede der Formhälften 1 und 2 auf der gleichen Seite einen separaten Einfülltrichter 5 und 6 besitzt, deren einander benachbarte Begrenzungswände 5a und 6a unmittelbar auseinander anliegen. Durch Ausbildung der Stirnflächen der benachbarten Begrenzungswände 5a und 6a als erhabener Steg bzw. als ähnliche strömungsteilende Leiteinrichtung LR für die flüssige Silikonmasse, können zudem beide Formhälften in einem Zug gleichzeitig abgegossen werden, nachdem die äußeren Stirnseiten 1c und 2c der beiden Formhälften 1 und 2 über lose, durch eine Spannklammer 9 o.ä. gehaltene Deckel 7 und 8 verschlossen worden sind.

### Bezugsziffernverzeichnis

- 1: Formhälfte
- 1a: Hals
- 1b: Stirnseite des Halses
- 1c: äußere Stirnseite
- 2: Formhälfte
- 2a: Ausnehmung
- 2b: Anschlagbund
- 2c: äußere Stirnseite
- 3: Klemmring
- 4: Zentrierelement
- 5: Einfülltrichter
- 5a: Wand
- 6: Einfülltrichter
- 6a: Wand
- 7: Deckel
- 8: Deckel
- 9: Spannklammer
- 10: Eingußtrichter
- 11: Ring
- 12: Schieber
- F: Folie
- F1: Folienränder
- K: Küvette
- L: Länge von "ST"
- LR: Leiteinrichtung
- M: Küvettenmittelachse
- S: Folienstärke
- SP: Spiel
- ST: Zahnstumpf
- T: Trennebene

## Patentansprüche

1. Küvette (K) zum Doublieren zahntechnischer Modelle (ST), bestehend aus mindestens zwei miteinander verspannbaren Formhälften (1 und 2), die Elemente (4) zum gegenseitigen Zentrieren sowie solche zum Festsetzen des zu doublierenden Zahnstumpfes (ST) einschließlich Mitteln zum Ausgleich der Abbindeexpansion des Einbettmaterials enthalten und mindestens einen Eingußtrichter (5 bzw. 6 bzw. 10) zum Einfüllen des flüssigen Silikons und der feuerfesten Abgußmasse aufweisen,
**dadurch gekennzeichnet,**
daß zum Expansionsausgleich eine in ihrer Stärke (S) der Größe der Abbindeexpansion der jeweiligen Einbettmasse entsprechende Folieneinlage (F) dient, die bei geschlossener Küvette (K) im Bereich der Trennebene (T) der beiden Formhälften (1 und 2) liegt und das zu doublierende Modell (Zahnstumpf "ST") zur Hälfte seiner Längserstreckung (L) sowie im Bereich der Küvettenmittelachse (M) liegend durch diese Folieneinlage (F) hindurchgesteckt und durch diese in Position gehalten ist, und daß jede Formhälfte einen Eingußtrichter aufweist.

2. Doublierküvette nach Anspruch 1,
**dadurch gekennzeichnet,**
daß eine der Formhälften (1) im Bereich der Trennebene (T) einen flanschartigen Hals (1a), die andere eine hiermit korrespondierende Ausnehmung (2a) mit einem die Einstecktiefe des Halses (1a) begrenzenden Anschlagbund (2b) aufweist und die Folieneinlage (F) zwischen letzterem (2b) und der Stirnseite (1b) des Halses (1a) eingeklemmt ist.

3. Doublierküvette nach den Ansprüchen 1 und 2,
**dadurch gekennzeichnet,**
daß die Folieneinlage (F) mit ihren Rändern (F 1) über die Außenseite des Halses (1a) gestülpt, gespannt und mit einem Klemmring (3) gehalten ist.

4. Doublierküvette nach den Ansprüchen 2 und 3,
**dadurch gekennzeichnet,**
daß Hals (1a) und Ausnehmung (2a) einen kreisrunden Querschnitt haben, in radialer Richtung mit Spiel (SP) zueinander liegen und über die Zentrierelemente (4) in Position zueinander gehalten sind.

5. Doublierküvette nach mindestens einem der vorhergehenden Ansprüche,
**dadurch gekennzeichnet,**
daß jede der Formhälften (1 und 2) auf der gleichen Seite einen separaten Einfülltrichter (5 und 6) besitzt, deren einander benachbarte Begrenzungswände (5a und 6a) unmittelbar aneinander anliegen.

6. Doublierküvette nach Anspruch 5,
**gekennzeichnet durch**
Ausbildung der Stirnflächen der benachbarten Begrenzungswände (5a und 6a) als erhabene, strömungsteilende Leiteinrichtung (LR) für die flüssige Silikonmasse.

7. Doublierküvette nach einem oder mehreren der vorhergehenden Ansprüche,
**dadurch gekennzeichnet,**
daß die äußeren Stirnseiten (1c und 2c) der beiden Formhälften (1 und 2) über lose, durch eine Spannklammer (9) o.ä. gehaltene Deckel (7 und 8) verschlossen sind.

8. Doublierküvette nach einem oder mehreren der vorhergehenden Ansprüche,
**gekennzeichnet durch**
einen separaten Eingußtrichter (10) samt Verschlußschieber (11, 12) für die Doublierung des jeweiligen Modells (Zahnstumpfes ST) nach seinem Entfernen aus der Silikonmasse und dem Herausnehmen der jeweiligen Folienmembran (F).

## Claims

1. Cuvette (K) for the duplication of dental models (ST), consisting of at least two mould halves (1 and 2) which can be tightened together and which comprise elements (4) for mutual centring as well as such for the fixing of the tooth stump (ST) to be duplicated inclusive of means for compensating for the setting expansion of the embedding material and have at least one pouring gate (5 or 6 or 10) for the pouring in of the liquid silicon and the refractory casting mass, characterised thereby that serving for the compensation for expansion is a foil inlay (F) which corresponds in its thickness (5) to the amount of the setting expansion of the respective embedding mass and which when the cuvette (K) is closed lies in the region of the separating plane (T) of the two mould halves (1 and 2), and the model (tooth stump "ST") to be duplicated is plugged, lying in the region of the cuvette centre axis, to half its longitudinal extent (L) through this foil inlay (F) and is held in position by this, and that each mould half has a pouring gate.

2. Duplicating cuvette according to claim 1, characterised thereby that one of the mould halves (1) has a flange-like neck (1a) in the region of the separating plane (T) and the other a recess (2a) which corresponds therewith and has a stop collar (2b) limiting the insertion depth of the neck (1a), and the foil inlay (F) is clamped in between the latter (2b) and the end face of the neck (1a).

3. Duplicating cuvette according to claims 1 and 2, characterised thereby that the foil inlay (F) is turned back by its edges (F1) over the outer side of the neck (1a), tensioned and held by a clamping ring (3).

4. Duplicating cuvette according to claims 2 and 3, characterised thereby that neck (1a) and recess (2a) have a circularly round cross-section, lie in radial direction with play (S) relative to one another and are held in position relative to each other by way of the centring elements (4).

5. Duplicating cuvette according to at least one of the preceding claims, characterised thereby that each of mould halves (1 and 2) possesses a separate pouring gate (5 and 6), the mutually adjacent boundary walls (5a and 6a) of which directly bear against each other, on the same side.

6. Duplicating cuvette according to claim 5, characterised by formation of the end faces of the adjacent boundary walls (5a and 6a) as a raised flow-dividing device (LR) for the liquid silicon mass.

7. Duplicating cuvette according to one or more of the preceding claims, characterised thereby that the outer end faces (1c and 2c) of the two mould halves (1 and 2) are closed by way of loose lids (7 and 8) held by a clamp (9) or similar.

8. Duplicating cuvette according to one or more of the preceding claims, characterised by a separate pouring gate (10), inclusive of shutter (11, 12), for the duplicating of the respective model (tooth stump ST) after its removal from the silicon mass and the taking out of the respective foil membrane (F).

## Revendications

1. Cuvette (K) pour dupliquer des modèles dentaires (ST), composée d'au moins deux moitiés de moule (1 et 2) pouvant être assemblées, qui contiennent des éléments (4) pour centrer mutuellement les deux moitiés de moule, ainsi que des éléments pour immobiliser le chicot (ST) à dupliquer, y compris des moyens pour compenser l'expansion de durcissement de la matière d'enrobage, et qui présentent au moins un entonnoir de coulée (5 ou 6 ou 10) pour verser le silicone liquide et la matière de moulage résistante au feu, caractérisée en ce qu'une garniture en film (F) dont l'épaisseur (S) correspond à la taille de l'expansion de durcissement de la matière d'enrobage sert à compenser l'expansion, laquelle, lorsque la cuvette (F) est fermée, se situe dans la zone du plan de séparation (T) des deux moitiés de moule (1 et 2), en ce que le modèle à dupliquer (chicot "ST") passe à travers cette garniture en film (F) avec la moitié de son étendue longitudinale (L) qui s'étend dans la zone de l'axe médian (M) de la cuvette et est maintenu par cette garniture en film, et en ce que chaque moitié de moule présente un entonnoir de remplissage.

2. Cuvette de duplication selon la revendication 1, caractérisée en ce que l'une des moitiés de moule (1) présente dans la zone du plan de séparation (T) un col (1a) semblable à une bride et l'autre moitié, un évidement (2a) complémentaire à ce dernier qui est muni d'un épaulement de butée (2b) limitant la profondeur d'enfoncement du col (1a), et en ce que la garniture en film (F) est coincée entre l'épaulement de butée (2b) et la face frontale (1b) du col (1a).

3. Cuvette de duplication selon les revendications 1 et 2, caractérisée en ce que la garniture en film (F) est enfilée avec ses bords (F 1) sur la face extérieure du col (1a), y est serrée, et fixée par une bague de serrage (3).

4. Cuvette de duplication selon les revendications 2 et 3, caractérisée en ce que le col (1a) et l'évidement (2a) ont une section circulaire, présentent un jeu (SP) l'un par rapport à l'autre dans la direction radiale, et sont maintenus en position l'un par rapport à l'autre par le biais d'éléments de centrage (4).

5. Cuvette de duplication selon au moins l'une des revendications précédentes, caractérisée en ce que chaque moitié de moule (1 et 2) comporte sur le même côté un entonnoir de remplissage (5 et 6) qui lui est propre et dont les parois de délimitations adjacentes (5a et 6a) sont directement appliquées l'une contre l'autre.

6. Cuvette de duplication selon la revendication 5, caractérisée en ce que les surfaces frontales des parois de délimitation adjacentes (5a et 6a) sont réalisées en tant que dispositif de guidage en relief (LR) divisant le flux de silicone liquide.

7. Cuvette de duplication selon l'une ou plusieurs des revendications précédentes, caractérisée en ce que les faces frontales extérieures (1c et 2c) des deux moitiés de moule (1 et 2) sont fermées par des couvercles (7 et 8) amovibles maintenus par une pince de serrage (9) ou analogues.

8. Cuvette de duplication selon l'une ou plusieurs des revendications précédentes, caractérisée par un entonnoir de coulée séparé (10) muni d'un clapet de fermeture (11, 12) pour dupliquer le modèle concerné (chicot ST) après l'avoir extrait de la masse de silicone et retiré la membrane en film (F).
